# EUROPEAN PATENT APPLICATION

(11) **EP 3 273 223 A1**
(43) Date of publication of application: **24.01.2018**
(21) Application number: 15885411.7
(22) Date of filing: 17.03.2015
(51) Int. Cl.: G01N 21/64

(54) **DEVICE FOR GENERATING FLUORESCENCE IMAGE AND METHOD FOR GENERATING FLUORESCENCE IMAGE**

(71) Applicant: Hamamatsu Photonics K.K., Hamamatsu-shi, Shizuoka 435-8558 (JP)
(72) Inventor: HIRAWAKE Kazumasa, Hamamatsu-shi Shizuoka 435-8558 (JP); MIWA Mitsuharu, Hamamatsu-shi Shizuoka 435-8558 (JP)
(74) Representative: Grünecker Patent- und Rechtsanwälte PartG mbB
(86) International application number: PCT/JP2015/057891
(87) International publication number: WO 2016/147315

(57) **Abstract**

A fluorescence image acquisition system is a system generating a fluorescence image by imaging fluorescence emitted from an observation object, the system including a light emitting device for iterating an output and stoppage of excitation light by emitting the excitation light toward the observation object during an ON period and stopping the emission of the excitation light during an OFF period, an imaging device having a light receiving unit including a plurality of pixels two-dimensionally arranged and an exposure control unit for controlling an exposure of the light receiving unit, and for outputting ON image data and OFF image data by capturing image of the observation object during each of the ON period and the OFF period, and a camera controller for generating fluorescence image data and setting an exposure time of the light receiving unit on the basis of the ON image data and the OFF image data.

## Description

### Technical Field

The present invention relates to a fluorescence image generation device and a fluorescence image generation method for generating a fluorescence image by imaging fluorescence to be measured.

### Background Art

Observation devices for observing a fluorescence image generated in accordance with emission of excitation light from a living body or the like have been used conventionally. Such observation devices generate image data by capturing fluorescence generated from illumination light with an imaging device. When such observation devices are used, it is desirable to remove an influence of light other than the fluorescence on the image data as much as possible. For example, in an image diagnosis device described in the following Patent Literature 1, a spectral characteristic of excitation light emitted from a light source is switched to a state that does not affect capturing a fluorescence image by a filter that blocks a near infrared wavelength component of the light source by using a switch being inserted when the fluorescence image is captured in an operating room.

### Citation List

### Patent Literature

[Patent Literature 1] Japanese Unexamined Patent Publication No. H9-000540
[Patent Literature 2] Japanese Unexamined Patent Publication No. H7-155292
[Patent Literature 3] Japanese Unexamined Patent Publication No. 2003-510121

### Summary of Invention

### Technical Problem

However, because it is necessary to perform loading and unloading of the filter with the switch in the device described in the above-described Patent Literature 1, operation thereof is complicated. Also, because another lighting fixture, such as a fluorescent lamp, is often present in addition to a shadowless lamp in an operating environment such as an operating room, it is difficult to remove an influence thereof.

Therefore, the present invention has been made in view of this problem, and an objective of the invention is to provide a fluorescence image generation device and a fluorescence image generation method capable of obtaining an appropriate fluorescence image in which an influence caused by an operating environment is reduced through a simple operation.

### Solution to Problem

To solve the above-described problem, a fluorescence image generation device according to an embodiment of the present invention is a device for generating a fluorescence image by imaging fluorescence emitted from an object, the device including: a light irradiating unit having a light source that emits excitation light and for emitting the excitation light toward the object during a first period, stopping emitting the excitation light during a second period different from the first period, and iterating the emission and stoppage of the excitation light; a capturing unit having a light receiving unit including a plurality of pixels that are two-dimensionally arranged and a control unit for controlling an exposure of the light receiving unit on the basis of a drive clock, and for outputting first image data corresponding to the first period and second image data corresponding to the second period by capturing image of the object; an image processing unit for generating fluorescence image data on the basis of the first image data and the second image data; and a setting unit for variably setting an exposure time of the light receiving unit.

Alternatively, a fluorescence image generation method according to another embodiment of the present invention is a method for generating a fluorescence image by imaging fluorescence emitted from an object, the method including: a step of using a light irradiating unit for emitting excitation light toward the object to emit the excitation light during a first period and stop emitting the excitation light during a second period different from the first period (an emission step); a step of iterating the emission and stoppage of the excitation light (an iteration step); a step of outputting first image data corresponding to the first period and second image data corresponding to the second period by capturing image of the object using a capturing unit having a light receiving unit including a plurality of pixels that are two-dimensionally arranged and a control unit for controlling an exposure of the light receiving unit on the basis of a drive clock (a capturing step); a step of generating fluorescence image data on the basis of the first image data and the second image data using an image processing unit (a generation step); and a step of variably setting an exposure time of the light receiving unit (a setting step).

According to the fluorescence image generation device or the fluorescence image generation method, the emission of the excitation light for the object is iteratively turned ON/OFF during the first period and the second period, the first image data and the second image data are output by capturing image of the object using the capturing unit having the light receiving unit including the plurality of pixels during each of the periods, and the fluorescence image data is generated on the basis of the image data. At this time, it is possible to obtain an appropriate fluorescence image in which an influence caused by an operating environment is reduced through a simple operation by setting an appropriate exposure time in accordance with the operating environment during capturing because the exposure time of the light receiving unit is variably set.

Here, in the fluorescence image generation device according to the above-described embodiment, the setting unit may variably set a count number of the drive clock corresponding to the exposure time, and the control unit may count the drive clock on the basis of the set count number to control the exposure time of the light receiving unit. Also, in the fluorescence image generation method according to the above-described other embodiment, a count number of the drive clock corresponding to the exposure time may be variably set in the setting step, and the drive clock may be counted on the basis of the set count number to control the exposure time of the light receiving unit in the capturing step. In this case, it is possible to appropriately control the exposure time of the light receiving unit on the basis of the exposure time variably set by the setting unit.

Also, the fluorescence image generation device may further include an analysis unit for analyzing pixel values corresponding to the plurality of pixels on the basis of at least one type of image data among the first image data, the second image data, and the fluorescence image data, wherein the analysis unit identifies a pixel with a saturated pixel value among the plurality of pixels. Also, the fluorescence image generation method may further include the step of analyzing pixel values corresponding to the plurality of pixels on the basis of at least one type of image data among the first image data, the second image data, and the fluorescence image data (an analysis step), wherein a pixel with a saturated pixel value among the plurality of pixels is identified in the analysis step. In this case, it is possible to set the exposure time of the light receiving unit to an appropriate value in accordance with a saturated state of the pixel value in the image data. As a result, it is possible to obtain an appropriate fluorescence image in which an influence caused by the operating environment is reduced.

Also, the number of saturated pixels may be calculated in the analysis unit and the analysis step, and the exposure time may be set on the basis of the number of saturated pixels in the setting unit and the setting step. If this configuration is adopted, it is possible to automatically appropriately set the exposure time of the light receiving unit in accordance with the saturated state of the pixel value in the image data. As a result, it is possible to obtain an appropriate fluorescence image in which an influence caused by the operating environment is reduced through a simpler operation.

Further, the fluorescence image generation device may further include an analysis unit for analyzing pixel values corresponding to the plurality of pixels on the basis of at least one type of image data among the first image data, the second image data, and the fluorescence image data, wherein the analysis unit calculates a difference value that is a difference between a saturated pixel value indicating that a pixel is saturated and a maximum value of the pixel values corresponding to the plurality of pixels. Also, the fluorescence image generation method may further include the step of analyzing pixel values corresponding to the plurality of pixels on the basis of at least one type of image data among the first image data, the second image data, and the fluorescence image data (an analysis step), wherein a difference value that is a difference between the saturated pixel value indicating that a pixel is saturated and a maximum value of the pixel values corresponding to the plurality of pixels is calculated in the analysis step. Thus, it is possible to set the exposure time of the light receiving unit to an appropriate value in accordance with the difference between the maximum value of the pixel values in the image data and the saturated pixel value. As a result, it is possible to obtain an appropriate fluorescence image in which an influence caused by the operating environment is reduced.

Further, the exposure time may be set on the basis of the difference value in the setting unit and the setting step. In this case, it is possible to automatically set the exposure time of the light receiving unit to an appropriate value in accordance with the difference between the maximum value of the pixel values in the image data and the saturated pixel value. As a result, it is possible to obtain an appropriate fluorescence image in which an influence caused by the operating environment is reduced through a simpler operation.

Further, the light irradiating unit may be configured to variably set lengths of the first period and the second period. If this light irradiating unit is provided, an emission time of the excitation light can be set in correspondence with the exposure time of the capturing unit.

The first period and the second period may be set in accordance with the exposure time. Thus, it is possible to efficiently capture a fluorescence image by setting the emission time of the excitation light in correspondence with the exposure time of the capturing unit.

Also, the first period and the second period may be set to the same time. In this case, the process can be simplified when the fluorescence image data is obtained from the first image data and the second image data.

Further, in the setting unit and the setting step, the exposure time may be variably set at least in a range that is greater than or equal to 1 msec and less than 30 msec.

Further, in the image processing unit and the generation step, a plurality of pieces of first image data and a plurality of pieces of second image data obtained by iterating the first period and the second period may be summed, a difference between a sum of the plurality of pieces of first image data and a sum of the plurality of pieces of second image data may be calculated, and the fluorescence image data may be generated. According to this configuration, it is possible to obtain a clear fluorescence image even when each exposure time is short because the fluorescence image data is generated from the difference between the sum of the plurality of piece of first image data and the sum of the plurality of pieces of second image data.

Further, in the image processing unit and the generation step, difference image data may be iteratively generated by calculating a difference between the first image data and the second image data, a plurality of pieces of iteratively generated difference image data may be summed, and the fluorescence image data may be generated. According to this configuration, it is possible to obtain a clear fluorescence image even when each exposure time is short because the fluorescence image data is generated by iteratively generating the difference image data between the first image data and the second image data and summing the difference image data.

Also, in the image processing unit and the generation step, at least one piece of fluorescence image data may be generated for 30 msec.

The fluorescence image generation device may further include a display unit for displaying a result of the analysis by the analysis unit. Also, the fluorescence image generation method may further include the step of displaying a result of the analysis in the analysis step on the display unit. If the display unit and the display step are provided, it is possible to visualize the analysis result as a criterion when the exposure time of the capturing unit is adjusted and the exposure time is easily set.

### Advantageous Effects of Invention

According to the present invention, it is possible to obtain an appropriate fluorescence image in which an influence caused by an operating environment is reduced through a simple operation.

### Brief Description of Drawings

FIG. 1 is a block diagram illustrating a schematic configuration of a fluorescence image acquisition system 1 according to a preferred embodiment of the present invention.
FIG. 2 is a timing chart illustrating timings of various operations controlled by a camera controller 15 of FIG. 1.
FIG. 3 is a timing chart illustrating timings of various operations controlled by the camera controller 15 of FIG. 1.
FIG. 4 is a diagram illustrating an image of fluorescence image data generated by an image processing unit 11 of FIG. 1 on the basis of ON image data and OFF image data.
FIG. 5 is a graph illustrating a histogram of a luminance value of image data calculated by an image analyzing unit 13 of FIG 1.
FIG. 6 is a flowchart illustrating procedures of an image analysis process by the image analyzing unit 13 of FIG. 1 and an exposure time adjustment process by a control unit 9 of FIG. 1.
FIG. 7 is a graph illustrating a histogram of a luminance value of image data calculated by the image analyzing unit 13 of FIG. 1.
FIG. 8 is a graph illustrating a histogram of a luminance value of image data calculated by the image analyzing unit 13 of FIG. 1.
FIG. 9 is a flowchart illustrating a procedure of a fluorescence image data generation process by the fluorescence image acquisition system 1 of FIG. 1.
FIG. 10 is a flowchart illustrating a procedure of an exposure time adjustment process in a fluorescence image acquisition system according to a modified example of the present invention.
FIG. 11 is a diagram illustrating a display example in a display device of the fluorescence image acquisition system during the process of FIG. 10.

### Description of Embodiments

Hereinafter, preferred embodiments of a fluorescence image generation device and a fluorescence image generation method according to the present invention will be described in detail with reference to the accompanying drawings. In the description of the drawings, the same or corresponding parts are denoted by the same reference numerals, and redundant descriptions thereof will be omitted.

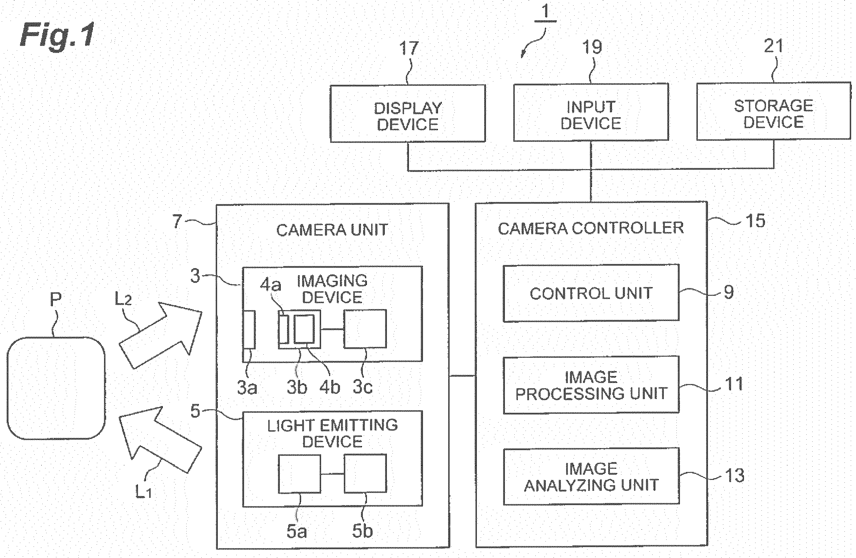

FIG. 1 is a block diagram illustrating a schematic configuration of a fluorescence image acquisition system 1 according to a preferred embodiment of the present invention. The fluorescence image acquisition system 1 illustrated in FIG. 1 is configured so that a user can observe an observation object P in a moving image by acquiring observation images of the observation object P in a time series at a predetermined frame rate. The observation object P is, for example, a biological tissue to which a fluorescent dye, such as indocyanine green, has been introduced in advance. If the fluorescence image acquisition system 1 is used, it is possible to observe how the fluorescent dye flows through blood vessels, lymph vessels, and the like of a living body and how a fluorescent pigment is accumulated in organs and lymph nodes in the living body. The fluorescence image acquisition system 1, which is one form of fluorescence image generation device, includes a camera unit 7 having an imaging device (capturing unit) 3 and a light emitting device (light irradiating unit) 5 built therein, a camera controller (setting unit) 15 electrically coupled to the camera unit 7 and having a control unit 9 for controlling the camera unit 7, an image processing unit 11 for processing image data output by the camera unit 7, and an image analyzing unit (analysis unit) 13, and a display device (display unit) 17, an input device 19, and a storage device 21 electrically coupled to the camera controller 15.

The light emitting device 5 includes a light source 5a that emits excitation light L₁ for exciting a fluorescent dye for fluorescence observation of the observation object P and a light source control unit 5b that controls ON/OFF of the emission of the excitation light L₁ of the light source 5a built therein. The light source 5a is a light emitting element such as a light emitting diode (LED), a laser diode (LD), or a super luminescent diode (SLD), and emits light having a wavelength that excites a fluorescent dye. The light source control unit 5b is a control circuit that alternately and iteratively switches ON (an output state) and OFF (an output stop state) of the excitation light emission of the light source 5a under the control of the camera controller 15 electrically coupled to the camera unit 7. Also, the light source control unit 5b is included so that the light emitting device 5 can independently variably set a length of a period during which the excitation light emission is ON and a length of a period during which the excitation light emission is OFF under the control of the camera controller 15. Although it is preferable that the wavelength of the light emitted from the light source 5a not include a wavelength of fluorescence, the light emitting device 5 may include an optical filter (not illustrated) that blocks light having the same wavelength as the wavelength of the fluorescence of light emitted from the light source 5a if the wavelength of the light emitted from the light source 5a includes the wavelength of fluorescence.

The imaging device 3 is a device for capturing an optical image of the observation object P under the control of the camera controller 15. The imaging device 3 includes an optical filter 3a that passes light of a wavelength of fluorescence L₂ emitted from the fluorescent dye and blocks light of a wavelength of the excitation light L₁, an imaging element 3b that receives the fluorescence L₂ passing through the optical filter 3a and background light, which is light from a background of a fluorescence image of the observation object P, and outputs image data by photoelectrically converting the light, and an imaging control unit (setting unit) 3c that adjusts an exposure timing and an exposure time of the imaging element 3b under the control of the camera controller 15. The imaging element 3b is an area image sensor such as a CCD image sensor or a CMOS image sensor, and includes a light receiving unit 4a having a plurality of pixels (photoelectric conversion elements) that are two-dimensionally arranged and an exposure control unit 4b that controls exposure of the light receiving unit 4a. The exposure control unit 4b receives a count number corresponding to the exposure time set by the camera controller 15 (or the imaging control unit 3c) and counts a drive clock by the count number corresponding to the set exposure time to control the exposure of the light receiving unit 4a. Because the camera controller 15 (or the imaging control unit 3c) can variably set the count number corresponding to the exposure time, the fluorescence image acquisition system 1 can variably set the exposure time of the light receiving unit 4a. The control of the exposure time of the light receiving unit 4a is not limited thereto, and the camera controller 15 (or the imaging control unit 3c) variably sets a frequency of the drive clock, and the exposure control unit 4b of the imaging element 3b may control the exposure of the light receiving unit 4a on the basis of the drive clock of the set frequency. In this case, even if the count number corresponding to the exposure time is the same, the fluorescence image acquisition system 1 can variably set the exposure time of the light receiving unit 4a by changing the frequency of the drive clock. Also, the camera controller 15 (or the imaging control unit 3c) may stop the drive clock for a stop time. In this case, even when the count number corresponding to the exposure time and the frequency of the drive clock are the same, the fluorescence image acquisition system 1 can variably set the exposure time of the light receiving unit 4a by changing a length of the stop time. Because the optical filter 3a is configured to pass light having the wavelength of the fluorescence L₂ as well as light of a wavelength of reflected light generated in the observation object P from illumination light emitted from an external illumination device, the imaging element 3b receives the reflected light from the observation object P as background light. That is, because illumination devices such as a shadowless lamp and a fluorescent lamp other than the light emitting device 5 may also exist in an operating environment such as an operating room, reflected light on the observation object P due to light from those illumination devices also includes light in the vicinity of a wavelength band that is the same as that of the fluorescence L₂, and the light is received by the light receiving unit 4a of the imaging element 3b as background light.

In the camera unit 7 having the above-described configuration, the imaging element 3b receives (captures) fluorescence from the observation object P and background light, and outputs ON image data as image data in accordance with the received (imaged) fluorescence in a period during which the excitation light emission of the light source 5a is ON (hereinafter simply referred to as an "ON period"). On the other hand, the imaging element 3b receives (captures) background light from the observation object P and outputs OFF image data as image data in accordance with the received (captured) background light in a period during which the excitation light emission of the light source 5a is OFF (hereinafter simply referred to as an "OFF period"). The imaging control unit 3c outputs the drive clock to the exposure control unit 4b of the imaging element 3b. The exposure control unit 4b of the imaging element 3b counts the drive clock by the number of clocks corresponding to the exposure time. The exposure control unit 4b counts the drive clock on the basis of the number of clocks corresponding to the exposure time set so that the exposure time is set to, for example, 30 msec if the frame rate of the image data output from the camera unit 7 is set to, for example, 30 frames/sec, and counts the drive clock on the basis of the number of clocks corresponding to the exposure time set to be variable in a range of 60 msec to 1 msec in accordance with an adjusted frame rate if the frame rate is adjusted in a range of 15 frames/sec to 1000 frames/sec by a setting change of the camera unit 7. Although the adjustable range of the exposure time is not limited to the above-described range, the imaging device 3 is configured to variably set the exposure time in at least the range of 1 msec to 30 msec in order to obtain an optimum fluorescence image under various operating environments. Also, the drive clock may be output from the camera controller 15 to the exposure control unit 4b of the imaging element 3b.

The camera controller 15 is a data processing device including an arithmetic processing circuit such as a CPU, a memory, and the like, and the control unit 9, the image processing unit 11, and the image analyzing unit 13 are functionally mounted in the data processing device. However, the control unit 9, the image processing unit 11, and the image analyzing unit 13 are not limited to the case in which they are configured within the same device and may be configured to be distributed in a plurality of devices.

The control unit 9 of the camera controller 15 controls operations of the imaging device 3 and the light emitting device 5. That is, the control unit 9 controls ON/OFF of the excitation light emitted by the light emitting device 5 and the exposure timing of the imaging element 3b so that they are synchronized. Further, the control unit 9 controls the exposure time of the imaging element 3b of the imaging device 3 so that the exposure time is adjusted via the imaging control unit 3c on the basis of an analysis result of the image analyzing unit 13 to be described below. For example, the control unit 9 of the camera controller 15 sets a count number corresponding to an exposure period of the light receiving unit 4a of the imaging element 3b on the basis of the analysis result of the image analyzing unit 13.

The image processing unit 11 of the camera controller 15 performs image processing on the ON image data and the OFF image data output from the imaging element 3b to create fluorescence image data in which a fluorescence image, which is an image formed by fluorescence among optical images from the observation object P, is reflected and background image data in which a background image, which is an image formed by background light among the optical images from the observation object P, is reflected. Specifically, the image processing unit 11 creates the fluorescence image data by calculating a difference between the ON image data and the OFF image data at the same pixel position of the image data. Also, the image processing unit 11 creates the background image data using the OFF image data as it is. Further, the image processing unit 11 creates superimposed image data, in which an image in which the background image from the observation object P and the fluorescence image from the observation object P are superimposed, is reflected using the fluorescence image data and the background image data, and outputs the created superimposed image data to the display device 17 and the storage device 21 as output image data.

The image analyzing unit (analyzer) 13 of the camera controller 15 analyzes pixel values indicating light receiving sensitivity corresponding to pixels in the image data with respect to at least one type of image data among the ON image data and the OFF image data output from the imaging device 3 and the fluorescence image data created by the image processing unit 11. That is, the image analyzing unit 13 identifies a pixel whose pixel value is saturated among a plurality of pixels in the image data to be analyzed, calculates the number of identified pixels, and notifies the control unit 9 of the number of pixels as the analysis result. Along with this, the image analyzing unit 13 identifies a maximum value of the pixel values of the plurality of pixels in the image data to be analyzed, calculates a difference value between the maximum value and a saturated pixel value indicating that the pixel is saturated, and notifies the control unit 9 of the difference value as the analysis result.

The display device 17 is an image output device such as a display device coupled to the camera controller 15 and displays display image data output from the image processing unit 11 and the analysis result analyzed by the image analyzing unit 13. Also, the input device 19 is a data input device such as a keyboard, a mouse, or a touch panel display coupled to the camera controller 15 and inputs parameters for designating imaging conditions in the camera unit 7 and parameters indicating conditions of image processing in the image processing unit 11. For example, the input device 19 receives an input of set values such as the exposure time of the imaging device 3, an emission intensity of the light emitting device 5, and a generation condition at the time of creating a superimposed image in the image processing unit 11, and sets parameters thereof in the camera controller 15. In correspondence with these parameters, the control unit 9 of the camera controller 15 performs control so that the exposure time of the imaging device 3 and the emission intensity of the light emitting device 5 are adjusted, and the image processing unit 11 of the camera controller 15 adjusts a creation condition of the superimposed image. For example, the control unit 9 of the camera controller 15 sets a count number corresponding to the exposure time of the light receiving unit 4a of the imaging element 3b on the basis of the information about the exposure time input to the input device 19. Then, information about the count number is output to the exposure control unit 4b of the imaging element 3b. Also, the storage device 21 is a data storage device coupled to the camera controller 15 and stores display image data, analysis result data, various types of image data that is processed by the camera controller 15, and various types of parameter data that is set by the input device 19.

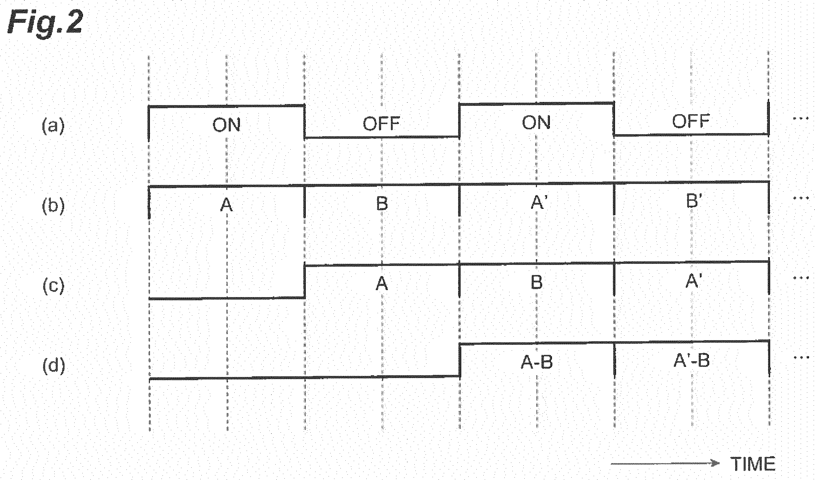

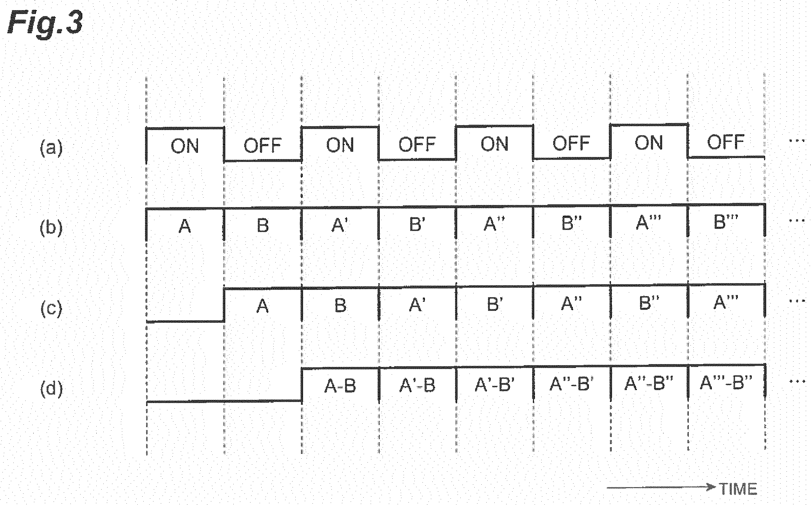

Here, a temporal relationship of an ON/OFF timing of the excitation light emission of the light source 5a, the exposure timing of the imaging element 3b, and a generation timing of the fluorescence image data by the image processing unit 11 will be described with reference to FIGS. 2 and 3. FIG. 2 is a timing chart illustrating timings of various operations controlled by the camera controller 15. The part (a) in FIG. 2 illustrates the ON/OFF timing of the excitation light emission of the light source 5a, the part (b) in FIG. 2 illustrates the exposure timing of the imaging element 3b, the part (c) in FIG 2 illustrates a saving timing of the image data of the image processing unit 11, and the part (d) in FIG. 2 illustrates the generation timing of the fluorescence image data of the image processing unit 11.

As illustrated in the part (a) and (b) in FIG. 2, the control unit 9 controls the ON/OFF timing of the excitation light of the light source 5a so that the ON period and the OFF period are alternately iterated in synchronization with the exposure period of one frame of the imaging element 3b. That is, a length of the ON period and a length of the OFF period are substantially the same as a length (exposure time) of the exposure period, and the OFF period different from the ON period is set to have the same length as the ON period. For example, 30 msec is set as the lengths of the ON period and the OFF period. Then, the image processing unit 11 acquires image data output on the basis of electric charge accumulated in accordance with the exposure of the imaging element 3b in the ON period as ON image data A. Thereafter, the image processing unit 11 acquires image data output on the basis of the electric charge accumulated in accordance with the exposure of the imaging element 3b in the subsequent OFF period as OFF image data B. At this time, the first ON image data A is stored in the memory in the image processing unit 11 at an acquisition time thereof, and then the OFF image data B acquired thereafter is input to a difference circuit in the image processing unit 11 and saved in the memory. The ON image data A in the memory is also input to the difference circuit at a timing at which the OFF image data B is input to the difference circuit so that a difference between the two pieces of image data is calculated and fluorescence image data A-B is created. Subsequently, subsequently obtained ON image data A' is input to the difference circuit and saved in the memory. The OFF image data B in the memory is also input to the difference circuit at a timing at which the ON image data A' is input to the difference circuit so that a difference between the two pieces of image data is calculated and fluorescence image data A'-B is created. By iterating such processing, the image processing unit 11 can acquire time-series fluorescence image data during each exposure period (frame) of the imaging element 3b.

Also, a temporal relationship between the exposure timing of the imaging element 3b when the exposure time of the imaging device 3 is adjusted by the control unit 9 and the generation timing of the fluorescence image data by the image processing unit 11 is illustrated in FIG. 3. FIG. 3 is a timing chart illustrating timings of various operations controlled by the camera controller 15 when the exposure time is adjusted to be shorter than that of FIG. 2. The part (a) in FIG. 3 illustrates an ON/OFF timing of the excitation light emission of the light source 5a, the part (b) in FIG. 3 illustrates the exposure timing of the imaging element 3b, the part (c) in FIG. 3 illustrates the saving timing of the image data of the image processing unit 11, and the part (d) in FIG. 3 illustrates the generation timing of the fluorescence image data of the image processing unit 11. As described above, according to a process in which the exposure time is adjusted to be short when the ON image data A and the OFF image data B are acquired, the ON period and the OFF period for the excitation light of the light source 5a arc also controlled so that the ON period and the OFF period are short in synchronization with the exposure period. For example, 15 msec is set as the lengths of the ON period and OFF period.

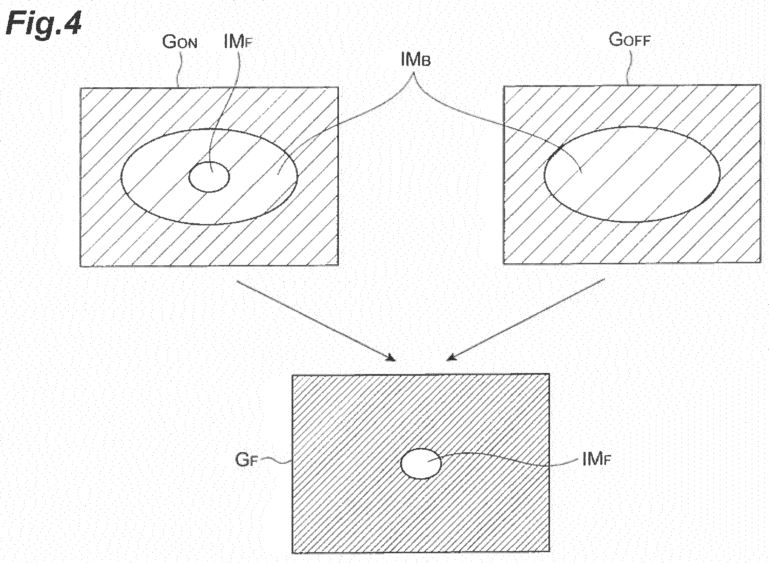

FIG. 4 is a diagram illustrating an image G_{F} of fluorescence image data generated by the image processing unit 11 on the basis of ON image data G_{ON} and OFF image data G_{OFF}. As described above, it is possible to obtain fluorescence image data in which a fluorescence image IM_{F}: is reflected by taking a difference between the ON image G_{ON}, in which the fluorescence image 1M_{F} and a background image 1M_{B} are reflected, and the OFF image G_{OFF}, in which the background image IM_{B} is reflected.

If a luminance value (a pixel value) of the fluorescence image data created by the image processing unit 11 from data of one ON image and data of one OFF image is small, it is also possible to generate fluorescence image data on the basis of the image data summed as follows. That is, the image processing unit 11 sums a plurality of pieces of data including ON images and a plurality of pieces of data including the same number of OFF images as the ON images, which are acquired in association with the iterations of the ON period and the OFF period, respectively, and calculates difference image data between the summed ON image data and the summed OFF image data as the fluorescence image data. For example, according to the example of FIG. 3, summed ON image data A+A'+A" is generated by summing three pieces of ON image data A, A', and A", and summed OFF-image data B+B'+B" is generated by summing three pieces of OFF image data B, B', and B", and fluorescence image data {(A+A'+A")-(B+B'+B")} is generated by calculating a difference therebetween. The number of pieces of image data to be summed is identified by a parameter set by the input device 19. However, from the viewpoint of acquiring the fluorescence image data as a moving image with high temporal resolution, it is preferable that an exposure time and the number of images to be summed be set so that at least one piece of fluorescence image data is obtained within 30 msec.

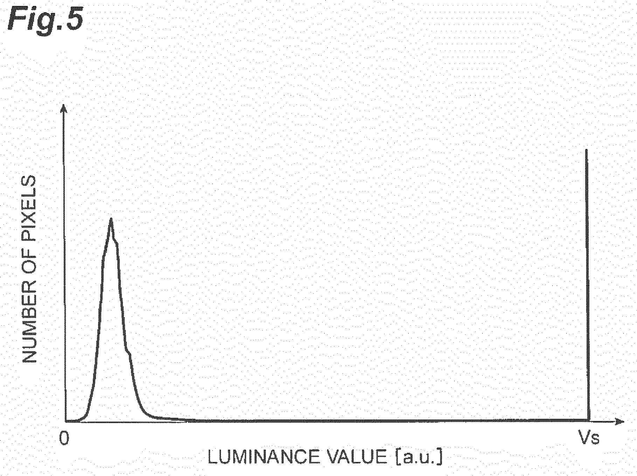

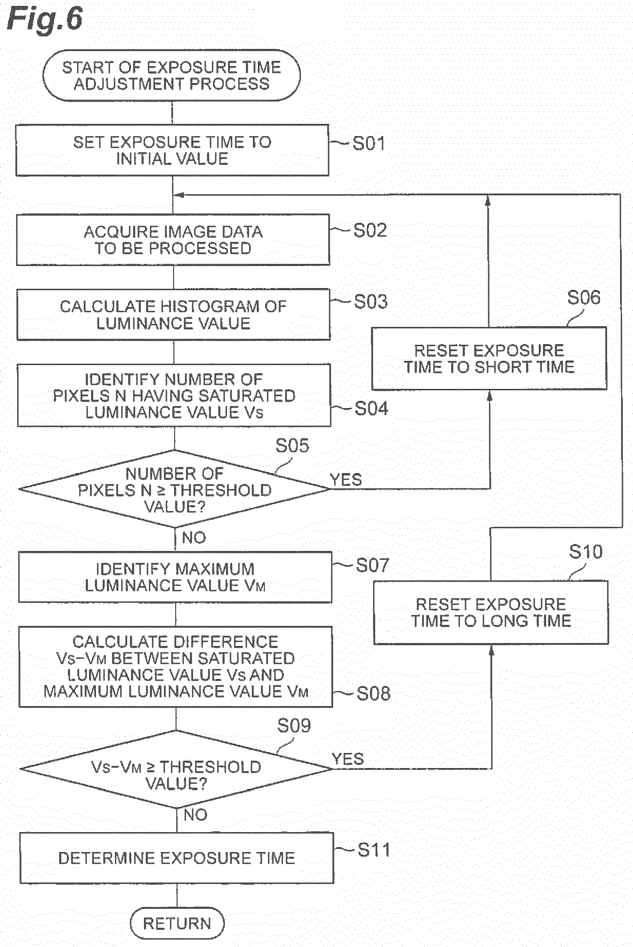

Next, details of the image analysis process by the image analyzing unit 13 of the camera controller 15 and the exposure time adjustment process by the control unit 9 will be described. FIG. 5 is a graph illustrating a histogram of luminance values of image data calculated by the image analyzing unit 13, and FIG. 6 is a flowchart illustrating procedures of the image analysis process by the image analyzing unit 13 and the exposure time adjustment process by the control unit 9.

First, when the exposure time adjustment process is started, an exposure time of the imaging device 3 is set on the basis of an initial value of the exposure time stored in the storage device 21 by the control unit 9 (step S01). In this state, the image analyzing unit 13 acquires image data to be analyzed. The image data to be analyzed includes OFF image data acquired by the image processing unit 11 in a state in which excitation light emission of the light source 5a is turned OFF, but the image data to be analyzed may be ON image data acquired by the image processing unit 11 in a state in which the excitation light emission of the light source 5a is turned ON, fluorescence image data generated by the image processing unit 11, or superimposed image data in which any of the OFF image data, ON image data, and fluorescence image data is selected and superimposed.

Next, the image analyzing unit 13 calculates histogram data indicating a frequency distribution of a luminance value by aggregating luminance values of pixels in the image data with respect to the image data to be processed (step S03). An example of the histogram data calculated by the image analyzing unit 13 is illustrated in FIG. 5. As described above, a frequency distribution in a range from 0, which is a minimum value of the luminance value, to a maximum value (saturated luminance value) V_{S} of the luminance value indicating saturated luminance is calculated.

Further, the image analyzing unit 13 identifies the number of pixels N of pixels having the saturated luminance value V_{S} among the pixels in the image data to be processed on the basis of the calculated histogram data (step S04). Thereafter, the image analyzing unit 13 determines whether or not the identified number of pixels N is greater than or equal to a predefined threshold value (step S05). If it is determined that the number of pixels N is greater than or equal to the threshold value as a result of the determination (step S05; YES), the control unit 9 resets the exposure time of the imaging device 3 so that the exposure time of the imaging device 3 is shortened by a predetermined time from a currently set value (step S06), and the process returns to step S02.

On the other hand, if the image analyzing unit 13 determines that the number of pixels N is less than the threshold value (step S05; NO), a maximum luminance value V_{M}, which is a maximum value among the luminance values of the pixels in the image data to be processed, is identified on the basis of the histogram data (step S07). Further, the image analyzing unit 13 calculates a difference luminance value V_{S}-V_{M}, which is a difference value between the saturated luminance value V_{S} and the maximum luminance value V_{M} (step S08). Thereafter, the image analyzing unit 13 determines whether or not the difference luminance value V_{S}-V_{M} is greater than or equal to a predefined threshold value (step S09). If it is determined that the difference luminance value V_{S}-V_{M} is greater than or equal to the threshold value as a result of the determination (step S09; YES), the control unit 9 resets the exposure time of the imaging device 3 so that the exposure time is a predetermined time longer than the current set value (step S10), and the process returns to step S02. On the other hand, if the image analyzing unit 13 determines that the difference luminance value V_{S}-V_{M} is less than the threshold value (step S09; NO), the exposure time set at that time point is determined to be a final exposure time (step S11), and the exposure time adjustment process is completed. Thereafter, for example, the control unit 9 sets at least one of a count number, a frequency of a drive clock, and a stop time corresponding to the exposure time on the basis of the adjusted exposure time.

The above-described exposure time adjustment process is a process capable of coping with a length of an initial value of the exposure time. That is, if the initial value of the exposure time is set to 30 msec corresponding to a general frame rate of 30 fps, the exposure time can be adjusted to be shortened to an optimum value in the adjustment process of steps S04 to S06. On the other hand, if the initial value of the exposure time is set to a sufficiently small time (for example, 1 msec), the exposure time can be adjusted to be lengthened to the optimum value in the adjustment process of steps S07 to S10. Here, the present invention is not limited to the case in which both the process of steps S04 to S06 and the process of steps S07 to S10 are executed, and one of the processes may be omitted if the initial value of the exposure time is fixed in advance.

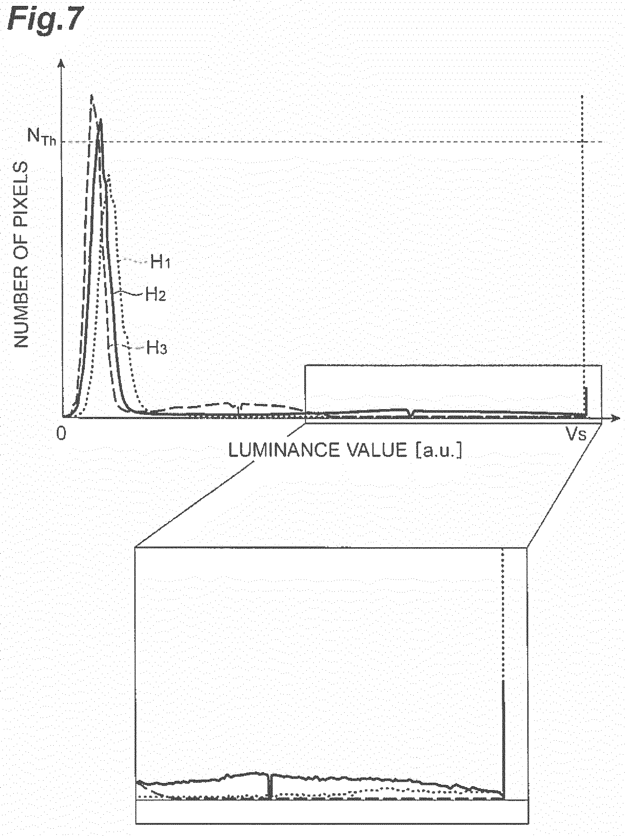

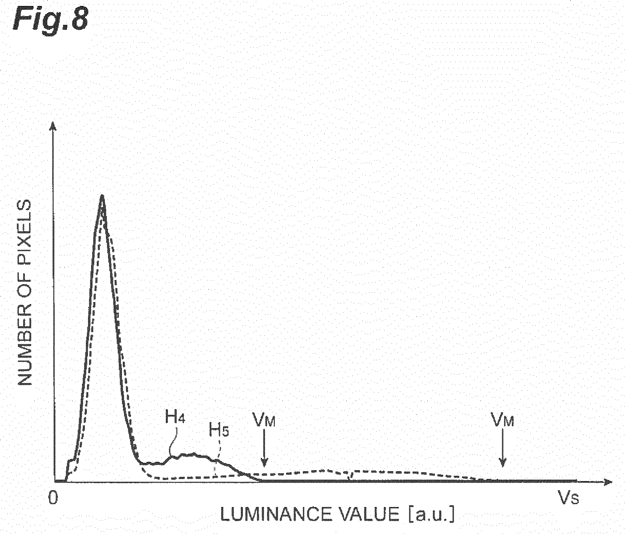

An example of a change in histogram data calculated in association with the exposure time adjustment process if the initial value of the exposure time is set to a relatively large value is illustrated in FIG. 7. At a point in time at which the exposure time is set to the initial value, the number of pixels N corresponding to the saturated luminance value V_{S} exceeds a threshold value N_{Th} as illustrated in a histogram H₁ of FIG. 7. However, as a result of adjusting the exposure time in the subsequent adjustment process, the number of pixels N decreases to less than the threshold value N_{Th}, and histograms H₂ and H₃ are adjusted so that the histograms H₂ and H₃ in which a frequency distribution of the luminance value between 0 and the saturated luminance value V_{S} is increased are obtained. Also, an example of a change in histogram data calculated in association with the exposure time adjustment process if the initial value of the exposure time is set to a relatively small value is illustrated in FIG 8. At a point in time at which the exposure time is set to the initial value, the difference luminance value V_{S}-V_{M} exceeds the threshold as shown in a histogram H₁ of FIG. 8. However, as a result of adjusting the exposure time in the subsequent adjustment process, the difference luminance value V_{S}-V_{M} becomes smaller than the threshold value, and the frequency distribution of the luminance value is adjusted so that a histogram H₅ is obtained to be biased to the saturated luminance value V_{S} side.

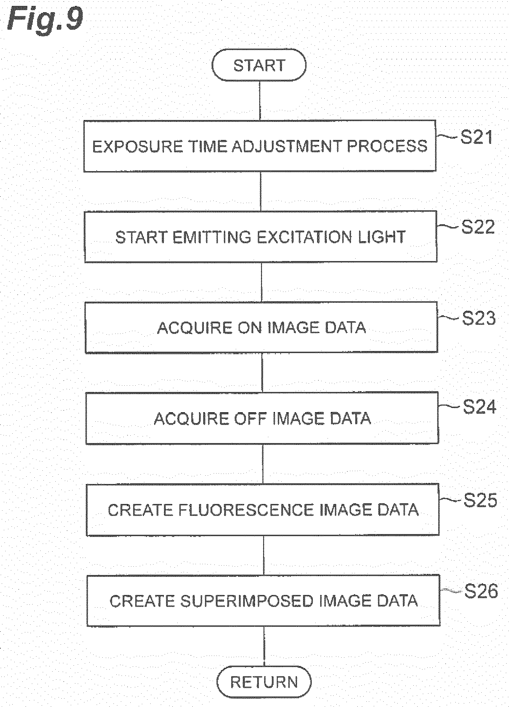

Hereinafter, a procedure of a fluorescence image data generation process by the above-described fluorescence image acquisition system 1 will be described, and a fluorescence image generation method of this embodiment will be described in detail. FIG. 9 is a flowchart illustrating the procedure of the fluorescence image data generation process by the fluorescence image acquisition system 1. The fluorescence image acquisition system 1 is configured so that fluorescence images of the observation object P can be acquired in time series by iterating process illustrated in FIG. 9.

First, when a fluorescence image acquisition process is started by an instruction input by a user, an exposure time adjustment process of the imaging device 3 is executed (step S21). Then, under control of the control unit 9, ON/OFF switching of excitation light from the light source 5a is started at a timing (an ON period or an OFF period) synchronized with an exposure period of the imaging element 3b (step S22). ON image data is acquired from the imaging device 3 by the image processing unit 11 in synchronization with the ON period (step S23). Subsequently, the image processing unit 11 acquires OFF image data from the imaging device 3 in synchronization with the OFF period (step S24). Thereafter, a difference between the ON image data and the OFF image data is calculated by the image processing unit 11 so that fluorescence image data is created (step S25). Further, the image processing unit 11 creates superimposed image data by superimposing the OFF image data and fluorescence image data (step S26). The superimposed image data is displayed on the display device 17.

According to the above-described fluorescence image acquisition system 1, emission of the excitation light toward the observation object P is iteratively turned ON/OFF in the ON period and the OFF period, the ON image data and the OFF image data are output by capturing image of the observation object P using the imaging element 3b having a plurality of pixels in each of the periods, and the fluorescence image data is generated on the basis of the image data. At this time, because the exposure time of the plurality of pixels of the imaging element 3b is variable, it is possible to obtain an appropriate fluorescence image in which an influence caused by an operating environment is reduced through a simple operation by setting an appropriate exposure time according to the operating environment during capturing.

Also, in the present embodiment, it is possible to set the exposure time of the imaging element 3b to an appropriate value according to a saturated state of the pixel value in the image data. As a result, it is possible to obtain an appropriate fluorescence image in which the influence caused by the operating environment is reduced. That is, it is possible to prevent pixels from being saturated when the exposure time is too long, and it is also possible to prevent a situation in which noise becomes dominant in the fluorescence image data when the exposure time is too short. For example, even when lighting fixtures, such as shadowless lamps, are present in an operating environment, such as an operating room, saturation of pixels and generation of noise can be prevented and clear fluorescence images can be observed. Some shadowless lamps having various emission wavelengths and illuminance of an LED type, a fluorescent lamp type, a lamp type, and the like exist. The exposure time can be variably set under the control of the camera controller 15 so that an optimum exposure time is automatically set regardless of the type of shadowless lamp.

Here, in the present embodiment, the ON period and the OFF period are set according to the exposure time and are set to the same time. In this manner, it is possible to efficiently capture the fluorescence image by setting the emission time of the excitation light in correspondence with the exposure time of the imaging element 3b, and the process can be simplified when the fluorescence image data is obtained from ON image data and OFF image data because exposure conditions of the ON image data and the OFF image data are the same. Further, the image processing unit 11 generates the fluorescence image data by calculating a difference between summed ON image data and summed OFF image data. Thereby, a clear fluorescence image can be obtained even when the individual exposure times of the ON image data and the OFF image data are short.

Also, the present invention is not limited to the above-described embodiment.

For example, the exposure time adjustment process by the camera controller 15 is not limited to the case in which the exposure time is automatically controlled in accordance with the analysis result of the image analyzing unit 13, and the exposure time adjustment process by the camera controller 15 may be executed so that the exposure time is adjusted in accordance with an instruction input that is input to the input device 19 by the user.

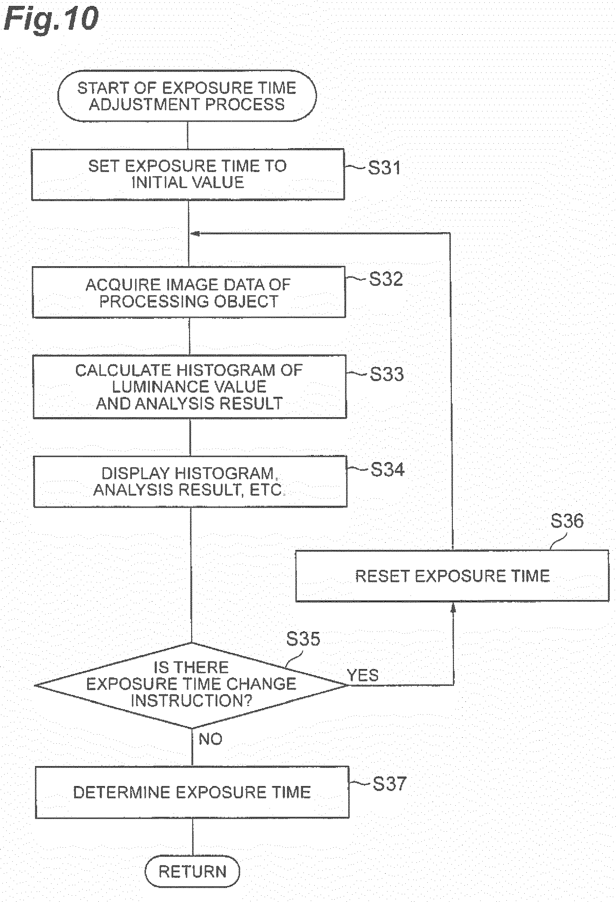

FIG. 10 is a flowchart illustrating a flow of an exposure time adjustment process in a fluorescence image acquisition system 1A according to a modified example of the present invention. First, when the exposure time adjustment process is started, an exposure time of an imaging device 3 is set on the basis of an initial value of the exposure time stored in a storage device 21 by a control unit 9 (step S31). In this state, an image analyzing unit 13 acquires image data to be analyzed. Next, the image analyzing unit 13 aggregates luminance values of pixels in the image data with respect to the image data to be processed so that histogram data indicating a frequency distribution of the luminance values is calculated and analysis results such as the number of pixels N and a difference luminance value V_{S}-V_{M} are calculated (step S33).

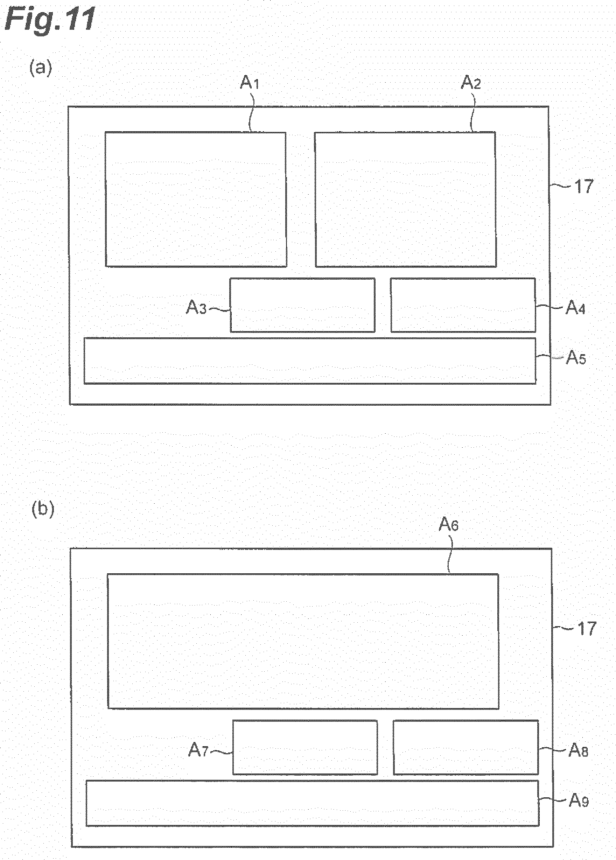

Thereafter, the histogram data calculated by the image analyzing unit 13 and data of the analysis results created by the image analyzing unit 13 are displayed on a display device 17 (step S34). An example of a layout of the information output to the display device 17 at this time is illustrated in FIG. 11. As illustrated in the part (a) FIG 11, on a screen of the display device 17, an appearance image is displayed on the basis of OFF image data in an area A₁, a fluorescence image is displayed in an area A₂ on the basis of fluorescence image data, a histogram calculated on the basis of the OFF image data is displayed in a graph form in an area A₃, a histogram calculated on the basis of the fluorescence image data is displayed in a graph form in an area A₄, and various parameters including analysis results such as the number of pixels N and the difference luminance value V_{S}-V_{M} arc displayed in an area A₅. Also, information may be displayed on the display device 17 in a layout illustrated in the part (b) in FIG 11. That is, on the screen of the display device 17, a superimposed image is displayed in an area A₆ on the basis of superimposed image data, the histogram calculated on the basis of the OFF image data is displayed in a graph form in an area A₇, the histogram calculated on the basis of the fluorescence image data is displayed in a graph form in an area A₈, and various parameters including the analysis results such as the number of pixels N and the difference luminance value V_{S}-V_{M} are displayed in an area A₉.

On the other hand, the user determines whether or not exposure time adjustment is necessary on the basis of display information output on the display device 17 and the user performs an instruction input for changing the exposure time on an input device 19. The control unit 9 of a camera controller 15 determines whether or not the instruction input for changing the exposure time is performed by the user (step S35). If it is determined that the exposure time change instruction has been issued as a result of the determination (step S35; YES), the control unit 9 resets the exposure time of the imaging device 3 (step S36), and the process is returned to step S32. On the other hand, if it is determined that there is no exposure time change instruction (step S35; NO), the exposure time set at that time is determined to be a final exposure time (step S37), and the exposure time adjustment process is completed. Thereafter, for example, the control unit 9 sets at least one of a count number, a frequency of a drive clock, and a stop time corresponding to the exposure time on the basis of the adjusted exposure time.

According to such a modified example, it is possible to visualize the analysis result as a criterion when an exposure time of an imaging element 3b is adjusted and it is easy for the user to set the exposure time. Thereby, it is possible to obtain an appropriate fluorescence image in which an influence caused by an operating environment is reduced through a simple operation.

In the above-described embodiment, if a luminance value of fluorescence image data created from data of one ON image and data of one OFF image is small, the fluorescence image data may be generated in the following manner. That is, the image processing unit 11 may iteratively generate difference image data by calculating differences on the basis of the ON image data and the OFF image data alternately obtained in association with the iterations of the ON period and the OFF period, and calculate the fluorescence image data by summing difference image data. For example, according to the example of FIG 3, difference image data A-B is calculated by calculating a difference between ON image data A and OFF image data B, difference image data A'-B and difference image data A'-B' are calculated by iterating similar processing, and difference image data {(A-B)+(A'-B)+(A'-B')} is generated by summing the difference image data. Even with such a process, a clear fluorescence image can be obtained even when the exposure time is relatively short.

### Industrial Applicability

The present invention is applied to a fluorescence image generation device and a fluorescence image generation method for generating a fluorescence image by imaging fluorescence of an object to be measured. According to the present invention, it is possible to obtain an appropriate fluorescence image in which an influence caused by an operating environment is reduced through a simple operation.

### Reference Signs List

1 Fluorescence image acquisition system
3 Imaging device (capturing unit)
3b Imaging element
4a Light receiving unit
4b Exposure control unit
3c Imaging control unit (setting unit)
5 Light emitting device (light irradiating unit)
5a Light source
11 Image processing unit
13 Image analyzing unit
15 Camera controller (setting unit)
17 Display device
19 Input device
21 Storage device
H₁, H₂, H₃, H₄, H₅ Histogram
L₁ Excitation light
L₂ Fluorescence
P Observation Object

## Claims

1. A fluorescence image generation device for generating a fluorescence image by imaging fluorescence emitted from an object, the fluorescence image generation device comprising:
a light irradiating unit having a light source that emits excitation light and for emitting the excitation light toward the object during a first period, stopping emitting the excitation light during a second period different from the first period, and iterating the emission and stoppage of the excitation light;
a capturing unit having a light receiving unit including a plurality of pixels that are two-dimensionally arranged and a control unit for controlling an exposure of the light receiving unit on the basis of a drive clock, and for outputting first image data corresponding to the first period and second image data corresponding to the second period by capturing image of the object;
an image processing unit for generating fluorescence image data on the basis of the first image data and the second image data; and
a setting unit for variably setting an exposure time of the light receiving unit.

2. The fluorescence image generation device according to claim 1,
wherein the setting unit is configured to variably set a count number of the drive clock corresponding to the exposure time, and
wherein the control unit is configured to count the drive clock on the basis of the set count number to control the exposure time of the light receiving unit.

3. The fluorescence image generation device according to claim 1 or 2, further comprising:
an analysis unit for analyzing pixel values corresponding to the plurality of pixels on the basis of at least one type of image data among the first image data, the second image data, and the fluorescence image data,
wherein the analysis unit is configured to identify a pixel with a saturated pixel value among the plurality of pixels.

4. The fluorescence image generation device according to claim 3,
wherein the analysis unit is configured to calculate the number of saturated pixels, and
wherein the setting unit is configured to set the exposure time on the basis of the number of saturated pixels.

5. The fluorescence image generation device according to claim 1 or 2, further comprising:
an analysis unit for analyzing pixel values corresponding to the plurality of pixels on the basis of at least one type of image data among the first image data, the second image data, and the fluorescence image data,
wherein the analysis unit is configured to calculate a difference value that is a difference between a saturated pixel value indicating that a pixel is saturated and a maximum value of the pixel values corresponding to the plurality of pixels.

6. The fluorescence image generation device according to claim 5,
wherein the setting unit is configured to set the exposure time on the basis of the difference value.

7. The fluorescence image generation device according to any one of claims 1 to 6, wherein the light irradiating unit is configured to variably set lengths of the first period and the second period.

8. The fluorescence image generation device according to any one of claims 1 to 7, wherein the first period and the second period are set in accordance with the exposure time.

9. The fluorescence image generation device according to any one of claims 1 to 8, wherein the first period and the second period are set to the same time.

10. The fluorescence image generation device according to any one of claims 1 to 9, wherein the setting unit is configured to variably set the exposure time at least in a range that is greater than or equal to 1 msec and less than 30 msec.

11. The fluorescence image generation device according to any one of claims 1 to 10, wherein the image processing unit is configured to sum a plurality of pieces of first image data and a plurality of pieces of second image data obtained by iterating the first period and the second period, calculate a difference between the plurality of pieces of first image data after the summation and the plurality of pieces of second image data after the summation, and generate the fluorescence image data.

12. The fluorescence image generation device according to any one of claims 1 to 10, wherein the image processing unit is configured to iteratively generate difference image data by calculating a difference between the first image data and the second image data, sum a plurality of pieces of iteratively generated difference image data, and generate the fluorescence image data.

13. The fluorescence image generation device according to any one of claims 1 to 12, wherein the image processing unit is configured to generate at least one piece of fluorescence image data for 30 msec.

14. The fluorescence image generation device according to claim 3 or 5, further comprising:
a display unit for displaying a result of the analysis by the analysis unit.

15. A fluorescence image generation method for generating a fluorescence image by imaging fluorescence emitted from an object, the fluorescence image generation method comprising:
a step of using a light irradiating unit for emitting excitation light toward the object to emit the excitation light during a first period and stop emitting the excitation light during a second period different from the first period;
a step of iterating the emission and stoppage of the excitation light;
a step of outputting first image data corresponding to the first period and second image data corresponding to the second period by capturing image of the object using a capturing unit having a light receiving unit including a plurality of pixels that are two-dimensionally arranged and a control unit for controlling an exposure of the light receiving unit on the basis of a drive clock;
a step of generating fluorescence image data on the basis of the first image data and the second image data using an image processing unit; and
a step of variably setting an exposure time of the light receiving unit.
